## Europäisches Patentamt
## European Patent Office
## Office européen des brevets

(19)

(11) Veröffentlichungsnummer : **0 062 657**
**B1**

(12) # EUROPÄISCHE PATENTSCHRIFT

(45) Veröffentlichungstag der Patentschrift :
21.01.87

(51) Int. Cl.⁴ : **G 05 B 19/42**

(21) Anmeldenummer : **81902839.0**

(22) Anmeldetag : **16.10.81**

(86) Internationale Anmeldenummer :
**PCT/DE 81/00174**

(87) Internationale Veröffentlichungsnummer :
**WO/8201427 (29.04.82 Gazette 82/11)**

(54) STEUERUNG FPR HANDHABUNGSSYSTEME UND HANDHABUNGSSYSTEM MIT EINER DERARTIGEN STEUE-RUNG.

(30) Priorität : **18.10.80 DE 3039400**

(43) Veröffentlichungstag der Anmeldung :
**20.10.82 Patentblatt 82/42**

(45) Bekanntmachung des Hinweises auf die Patenterteilung : **21.01.87 Patentblatt 87/04**

(84) Benannte Vertragsstaaten :
**CH FR GB LI SE**

(56) Entgegenhaltungen :
**FR-A- 2 357 942**
**FR-A- 2 385 133**
**US-A- 3 886 421**

(73) Patentinhaber : **Dr.-Ing. Ludwig Pietzsch GmbH & Co.**
**Hertzstrasse 32-34**
**D-7505 Ettlingen (DE)**

(72) Erfinder : **Pietzsch, Ludwig, Dr.-Ing.**
**Im Rosengärtle 14**
**D-7500 Karlsruhe 41 (DE)**

(74) Vertreter : **Geitz, Heinrich, Dr.-Ing.**
**Postfach 2708 Kaiserstrasse 156**
**D-7500 Karlsruhe 1 (DE)**

EP 0 062 657 B1

**Beschreibung**

Die Erfindung bezieht sich auf ein Verfahren zum Steuern von Handhabungssystemen, mit einem über Gelenke, die mit Drehantrieben ausgerüstet sind, und geradlinige Antriebe räumlich bewegbaren Greifer, bei dem zum Verfahren des Greifers aus einer Istposition in eine Sollposition den einzelnen Antrieben Sollwerte vorgegeben werden, und die geforderte Greiferposition durch Überlagerung der von den Einzelantrieben vermittelten Wegkomponenten erzielt wird, ferner auf ein Handhabungssystem zur Durchführung eines derartigen Verfahrens.

Den sogenannten Handhabungssystemen, die insbesondere als Industrieroboter bekannt geworden sind, kommt in vielen Bereichen der Wirtschaft zunehmende Bedeutung zu, so vornehmlich bei der Automatisierung bestimmter Arbeitsabläufe, wie sie im industriellen Produktionsprozeß anzutreffen sind. Bei den insoweit eingesetzten Systemen handelt es sich in aller Regel um ortsfest installierte Gelenkmanipulatoren, die mit einem räumlich bewegbaren, zumeist am Ende eines Greiferarms angeordneten Greifer als eigentliches Arbeitsmittel ausgerüstet sind. Für mit hohen Risiken belastete Aufgaben, etwa in kontaminierten Bereichen, sind auch schon auf ferngelenkten Fahrzeugen angeordnete Manipulatoren bekannt geworden, die im übrigen hinsichtlich Aufbau und Funktion den der Automatisierung von Arbeitsabläufen, etwa bei Montagevorgängen, dienenden Handhabungssystemen prinzipiell gleichartig sind.

Im Sinne der vorliegenden Erfindung sind unter Handhabungssystemen beispielsweise aber auch Bagger und ähnliche Geräte zu verstehen, bei denen es darauf ankommt, einen Greifer od. dgl. auf vorbestimmten Bahnen oder in vorbestimmte Sollpositionen zu steuern.

Neben einer den Erfordernissen der jeweiligen Zweckbestimmung entsprechenden Auslegung solcher Manipulatoren, etwa bezüglich der zu verwirklichenden Greiferwege und der zu beherrschenden Lasten, besteht das eigentliche Problem in der Steuerung der verschiedensten Antriebe, so, daß der in der Regel am Ende eines Greiferarms angeordnete Greifer zu vorbestimmten Zeitpunkten bzw. in Abhängigkeit von auslösenden Ereignissen vorbestimmte Positionen einnimmt oder auf vorbestimmten Bahnkurven mit gleichfalls vorbestimmten und ggf. auch veränderbaren Geschwindigkeiten geführt wird.

Zu diesem Zwecke werden bei bekannten Gelenkmanipulatoren die Bewegung eines jeden Gelenks und/oder eines jeden translatorischen Antriebs gemessen und aus diesen Meßwerten die Position des Greifers relativ zur Basis des Manipulators bestimmt. Jedem Gelenk bzw. jedem geradlinigen Antrieb wird ein Wert vorgegeben, den der Antrieb einnehmen soll. Die Genauigkeit, mit der der Greifer seine jeweils vorbestimmte Position erreicht, ist dabei abhängig von der Meßgenauigkeit in den Antrieben und von deren Positioniergenauigkeit, ferner von der Steifigkeit des Systems und den unter Last auftretenden elastischen Verformungen, wobei den letztgenannten Einflüssen insbesondere bei weit ausladenden Greiferarmen Bedeutung zukommt.

Angesichts der bei den oben erläuterten vorbekannten Handhabungssystemen zu beobachtenden Abweichungen der tatsächlich erzielten Greiferpositionen von den vorgegebenen Sollpositionen sollen durch die Erfindung ein gegenüber dem Stand der Technik verbessertes Verfahren zum Steuern derartiger Handhabungssysteme und ein der Durchführung dieses verbesserten Verfahrens dienendes Handhabungssystem geschaffen werden, die im Vergleich zum Stande der Technik bei minimalem Aufwand an Meßgebern eine optimale Positioniergenauigkeit ermöglichen.

Ausgehend von dem eingangs angegebenen Verfahren ist die insoweit gestellte Aufgabe dadurch gelöst, daß die Bewegung des Greifers und dessen jeweilige Position in einem inertialen Koordinatensystem durch unmittelbar dem Greifer zugeordnete inertiale Meßgeber, wie Kreisel und Beschleunigungsgeber, erfaßt wird und daß die so gewonnenen Daten in an sich bekannter Weise in Sollwerte für die einzelnen Antriebe umgesetzt und letzteren als jeweiliges Maß für das Ansteuern entsprechender Sollpositionen vorgegeben werden.

An die Stelle der bei bekannten Steuerungen den einzelnen Antrieben vorgegebenen Sollwerte, die jeweils mehr oder weniger genau erreicht werden und deren Überlagerung letztlich die tatsächlich erreichte Greiferposition bestimmt, wobei allerdings infolge möglicher Summation der in den einzelnen Gelenken und Antrieben auftretenden Abweichungen von den jeweiligen Sollwerten die Istposition des Greifers von der geforderten Sollposition erheblich verschieden sein kann, tritt bei der Erfindung die sogenannte Inertialnavigation, die sich eines erd- oder raumfesten Koordinatensystems bedient und auf dem Gedanken beruht, auftretende Beschleunigungen zu messen und daraus durch zweifache Integration über die Zeit den vom Greifer zurückgelegten Weg abzuleiten. Erfindungsgemäß wird mithin die jeweilige Position des Greifers bestimmt, mit einer vorbestimmten Sollposition verglichen und aus einer ggf. festgestellten Abweichung ein auf die Antriebe wirkender Steuerbefehl zum präzisen Anfahren der geforderten Sollposition abgeleitet. Angesichts dieser Erfassung der Greiferbewegung selbst und der Ermittlung der jeweiligen Greifer-Istposition im inertialen Koordinatensystem ist die Positioniergenauigkeit unabhängig von der Meßgenauigkeit der Geberkette und auch die Systemsteifigkeit ist nicht mehr genauigkeitsbestimmend.

Im Zusammenhang mit einem Lehrverfahren für einen Anstrichroboter ist in den FR-A 2 357 942 und 2 385 133 bzw. in der auf letztere zurückgehenden DE-A-27 31 041 zwar schon vorgeschlagen worden, eine Spritzpistole mit inertialen Meßgebern auszurüsten, aber diese Meßgeber dienen ausschließlich dem Zwecke, die bei dem Lehrverfahren von Menschenhand erzeugten Bewegungen der Spritzpistole in « Lerndaten » umzusetzen. Da sich somit die Lehre der Vorveröffentlichungen darin erschöpft, mittels inertialer Meßgeber von Hand vorgegebene Bewegungen einer hier nicht weiter interessierenden Steuerung einzugeben und den nachfolgenden Betrieb eines Handhabungssystems in Abhängigkeit von den gewonnenen Daten zu steuern, kann der Vorveröffentlichung eine irgendwie geartete Anregung nicht entnommen werden, die Bewegung eines Greifers und dessen jeweilige Position nach der Lehre des Patentanspruchs 1 zu erfassen und in Abhängigkeit davon die einzelnen Antriebe in die jeweiligen Sollpositionen zu steuern. Während bei der Erfindung Lagerspiele, unter Last auftretende Deformationen und ähnliche Einflüsse völlig eliminiert sind, führen derartige Störgrößen bei einem Handhabungssystem mit einer Steuerung nach den Vorveröffentlichungen notwendig insbesondere bei wechselnden Lasten und/oder Greiferauslenkungen zu Sollpositionsabweichungen, die zu eliminieren Ziel der Erfindung war.

In zweckmäßiger Ausgestaltung der Erfindung können die Einzelantriebe nach vorgebbaren Regeln mittels eines Maschinenprogramms angesteuert werden, beispielsweise über vorbestimmte Stützpunkte. Eine gleichfalls weitere Ausgestaltung des erfindungsgemäßen Verfahrens sieht vor, daß der Greifer in vorbestimmten Indexpositionen justiert wird, in denen ein Abgleich der inertialen Meßgeber stattfindet.

Bei einem derartigen Verfahren zum Steuern von Handhabungssystemen unter Verwendung eines inertialen Meßsystems, das unmittelbar dem Greifer zugeordnet ist und mithin präzis die Greiferbewegungen ausführt, gelingt in einfacher Weise auch das Zusammenarbeiten mehrerer Manipulatoren, da alle Positioniervorgänge in einem einheitlichen Koordinatensystem durchgeführt werden und die Anfangszustände aller Handhabungssysteme durch geeignete Maßnahmen, wie optische Vermessung, feststellbar sind. Auch bedarf es keiner festen Meßbasis. Die einzelnen Manipulatoren können vielmehr ohne irgend eine Einbuße der Positioniergenauigkeit als verfahrbare Systeme ausgebildet werden.

Wenn darüber hinaus Inertialgeber zum Einsatz kommen, welche die Bewegung des Greifers direkt als Signale in digitaler Form erfassen, so vermögen solche Geber unmittelbar mit Digitalrechnern zu korrespondieren. Dies ermöglicht einen besonders einfachen und kostengünstigen Aufbau entsprechender Steuerungen. Die Rechenkapazität bekannter Digitalrechner ist so groß, daß durch adaptive Regelung und spezielle Filter Unzulänglichkeiten der Antriebe und mechanische Schwingungen des Gesamtsystems, erfaßt und so kompensiert werden können, daß die Positioniergenauigkeit derartig angesteuerter Handhabungssysteme die bei bisher bekannten Systemen erzielbare Genauigkeit weit übersteigt.

Hinsichtlich des Handhabungssystems zum Durchführen eines erfindungsgemäßen Verfahrens ist die gestellte Erfindungsaufgabe dadurch gelöst, daß zumindest im Bereich des Greifers letzteren unmittelbar betätigende Feinantriebe hoher Präzision, jedoch mit geringen Dreh- und Wegbereichen angeordnet sind. Kennzeichnend für eine derartige Manipulatorenausbildung ist mithin, daß der Greifer zunächst unter Verzicht auf besondere Positioniergenauigkeit mehr oder weniger genau in eine geforderte Sollposition verfahrbar ist, etwa durch leistungsstarke Hauptantriebe, die über große Weg- und Drehbereiche bei nur begrenzter Genauigkeit verfügen, und daß die Feinantriebe dann die Steuerung des Greifers in die jeweilige Sollposition bewirken. Bei einer derartigen Ausbildung gelingt selbst bei mehrachsigen Manipulatoren und bei Handhabungssystemen für große Lasten ein äußerst einfacher und kostengünstiger Aufbau ohne Beeinträchtigung der durch das erfindungsgemäße Verfahren erzielten Positioniergenauigkeit.

## Patentansprüche

1. Verfahren zum Steuern von Handhabungssystemen, mit einem über Gelenke, die mit Drehantrieben ausgerüstet sind, und geradlinige Antriebe räumlich bewegbaren Greifer, bei dem zum Verfahren des Greifers aus einer Istposition in eine Sollposition den einzelnen Antrieben Sollwerte vorgegeben werden und die geforderte Greiferposition durch Überlagerung der von den Einzelantrieben vermittelten Wegkomponenten erzielt wird, dadurch gekennzeichnet, daß die Bewegung des Greifers und dessen jeweilige Position in einem intertialen Koordinatensystem durch unmittelbar dem Greifer zugeordnete inertiale Meßgeber (Kreisel, Beschleunigungsgeber) erfaßt wird, und daß die so gewonnenen Daten in an sich bekannter Weise in Sollwerte für die einzelnen Antriebe umgesetzt und letzteren als jeweiliges Maß für das Ansteuern entsprechender Sollpositionen vorgegeben werden.

2. Verfahren nach Anspruch 1, dadurch gekennzeichnet, daß die Einzelantriebe nach vorgebenen Regeln mittels eines Maschinenprogramms angesteuert werden.

3. Verfahren nach Anspruch 1 oder 2, dadurch gekennzeichnet, daß der Greifer in vorbestimmten Indexpositionen justiert wird, in denen ein Abgleich der inertialen Meßgeber stattfindet.

4. Handhabungssystem zur Durchführung eines Verfahrens nach einem der Ansprüche 1 bis 3, dadurch gekennzeichnet, daß zumindest im Bereich des Greifers letzteren unmittelbar betätigende Feinantriebe hoher Präzision, jedoch mit geringen Dreh- und Wegbereichen angeordnet sind.

5. Handhabungssystem nach Anspruch 4, gekennzeichnet durch leistungsstarke Hauptantriebe mit großen Weg- und Drehbereichen, jedoch nur begrenzter Genauigkeit.

## Claims

1. Method for the control of manipulation systems with a gripper which is movable in three dimensions by way of joints, which are equipped with rotary drives, and rectilinear drives, in which method target values are preset for the individual drives for the displacement of the gripper from an actual position into a target position and the required gripper position is achieved by superimposition of the travel components provided by the individual drives, characterised thereby, that the movement of the gripper and its respective position in an inertial co-ordinate system is detected by inertial measurement sensors (gyroscopes, acceleration sensors) directly associated with the gripper and that the data thus obtained are translated in an in itself known manner into target values for the individual drives and are preset for the latter as a respective measure for the driving towards corresponding target positions.

2. Method according to claim 1, characterised thereby, that the individual drives are controlled according to predetermined rules by means of a machine program.

3. Method according to claim 1 or 2, characterised thereby, that the gripper is adjusted in predetermined index positions, in which an alignment of the inertial measurement sensors takes place.

4. Manipulation system for the performance of a method according to one of the claims 1 to 3, characterised thereby, that at least in the region of the gripper, there are arranged fine drives which actuate the latter directly and are of high precision, but with small ranges of rotation and travel.

5. Manipulation system according to claim 4, characterised by powerful main drives with great ranges of travel and rotation, but only of limited accuracy.

## Revendications

1. Procédé de commande de systèmes manipulateurs, comportant une pince qui peut se déplacer dans l'espace au moyen d'articulations équipées de mécanismes de rotation et au moyen de mécanismes linéaires, procédé dans lequel, pour déplacer la pince d'une position actuelle à une position prescrite, on donne des valeurs prescrites aux différents mécanismes et on atteint la position désirée de la pince par superposition des composantes de déplacement obtenues par les différents mécanismes, caractérisé en ce que l'on saisit le déplacement de la pince et sa position respective dans un système de coordonnées inertielles, au moyen d'émetteurs de mesure inertiels correspondant immédiatement à la pince (gyroscope, émetteurs d'accélération) ; et en ce que l'on convertit les données ainsi obtenues, d'une façon connue en soi, en valeurs prescrites pour les différents mécanismes et en ce que l'on donne ces dernières comme mesures respectives pour la commande des positions prescrites correspondantes.

2. Procédé selon la revendication 1, caractérisé en ce que les différents mécanismes sont commandés selon des règles prédéterminées, au moyen d'un programme.

3. Procédé selon la revendication 1 ou 2, caractérisé en ce que la pince est étalonnée à des positions prédéterminées d'indexage où s'opère un réglage des émetteurs de mesure inertiels.

4. Système manipulateur pour l'exécution d'un procédé selon l'une des revendications 1 à 3, caractérisé en ce qu'au moins dans la zone de la pince sont disposés des mécanismes fins, de haute précision, mais à plage réduite de rotation et de déplacement, qui manœuvrent directement cette pince.

5. Système manipulateur selon la revendication 4, caractérisé par des mécanismes principaux puissants, à plage importante de déplacement et de rotation, mais de précision limitée.